# EUROPÄISCHE PATENTSCHRIFT

(11) **EP 1 018 476 B1**
(45) Veröffentlichungstag und Bekanntmachung des Hinweises auf die Patenterteilung: **31.03.2004**
(21) Anmeldenummer: 99811136.3
(22) Anmeldetag: 10.12.1999
(51) Int. Cl.: B65G 17/32

(54) **Verwendung einer Palette zum Fördern von Behältern**
Use of a pallet for transporting containers
Utilisation d'une palette pour le transport de récipients

(30) Priorität: 28.12.1998 DE 19859956
(43) Veröffentlichungstag der Anmeldung: 12.07.2000
(73) Patentinhaber: Alcan Technology & Management AG, 8212 Neuhausen am Rheinfall (CH)
(72) Erfinder: Vidal, Jean, 38550 Cheyssieu (FR)

(56) Entgegenhaltungen:
- WO-A-97/11015
- US-A- 4 274 532
- US-A- 5 295 570

## Beschreibung

Die Erfindung betrifft die Verwendung einer Palette zum Fördern von Behältern.

Bei der Bearbeitung von Behältern werden diese zur Durchführung von Behandlungsschritten zu Bearbeitungsstationen geführt, diesen gegebenenfalls übergeben, behandelt und anschliessend weitergeführt. Um die Behälter kostengünstig bearbeiten zu können, müssen die Fördervorrichtungen und die Bearbeitungsstationen so ausgebildet und aufeinander abgestimmt sein, dass ein hoher Behälter-Durchsatz mit einfachen Mitteln möglichst störungsfrei erzielbar ist.

Aus der WO-A-9711015 ist eine Anlage mit einer Fördervorrichtung mit Paletten zum Fördern von Behältern bekannt. Durch den Einsatz eines Magnetförderers kann auf mechanisch aufwendige Kompensations- oder Speichervorrichtungen, wie sie bei Kettenförderern zum Ausgleich betriebs- oder störungsbedingter lokaler Förderschwankungen erforderlich sind, verzichtet werden. Ein Nachteil der vorbekannten Vorrichtung liegt in der Verbindung zwischen Behälter und Palette, die für jede Behälterart bzw. - dimension angepasst werden muss.

Bei einer aus der US-A-4274532 bekannten Fördervorrichtung werden Dosen auf Paletten mit einem Dom transportiert. Die Höhe des Domes ist geringer als die Dosenhöhe.

Der Erfindung liegt die Aufgabe zugrunde, eine Palette zum Fördern von Behältern vorzuschlagen, welche unabhängig von der Behälterart bzw. -dimension, einfach in der Handhabung und kostengünstig in der Herstellung ist.

Zur erfindungsgemässen Lösung der Aufgabe führt die Verwendung einer Palette mit den Merkmalen von Anspruch 1.

Bevorzugt weist die Palette eine von der Bodenfläche aufragende, im wesentlichen zylindrische Umfangfläche auf. Der Dorn ist zentral und senkrecht zur Bodenfläche der Palette angeordnet.

Zur Erhöhung der Standfestigkeit der Palette bei aufgesetztem Behälter ist es zweckmässig, den Schwerpunkt in die Domachse und in den Bereich der Bodenfläche zu legen.

Die Palette kann aus Blech aus magnetisierbarem Material, insbesondere aus Stahlblech hergestellt werden. Eine andere Möglichkeit besteht darin, die Palette aus Kunststoff mit eingegossenem magnetisierbaren Material zu fertigen. Bei einer weiteren zweckmässigen Ausführungsform einer Palette kann diese aus ein- oder beidseitig mit magnetisierbarem Material beplanktem Kunststoff bestehen. Es sei hier noch erwähnt, dass das magnetisierbare Material auch ein Permanentmagnet sein kann.

Die Palette ist als kreisrunde Scheibe ausgebildet. Damit sich die auf die Paletten aufgesetzten Behälter gegenseitig nicht berühren können, ist der Durchmesser der Palette grösser als die maximale Auslenkung eines auf dem Dorn frei schwingend aufliegenden Behälters.

Um den Zusammenstoss zweier Paletten in einem Staubereich zu dämpfen, kann es sich als zweckmässig erweisen, seitlich am Umfang der Palette Magnete mit radial nach aussen gerichteten gleichen Polen anzuordnen.

Die erfindungsgemässen Paletten eignen sich insbesondere zum Fördern von fliessgepressten Dosen- und Tubenkörpem aus Aluminium zwischen Bearbeitungsstationen zum Reinigen, Beschichten, Trocknen und gegebenenfalls zur Durchführung weiterer Behandlungsschritte.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: die Draufsicht auf eine Anlage zum Bearbeiten von Behältern;
- Fig. 2: die Seitenansicht auf die Anlage von Fig. 1 in Blickrichtung y;
- Fig. 3: eine Schrägsicht auf eine Palette mit aufgesetztem Behälter.

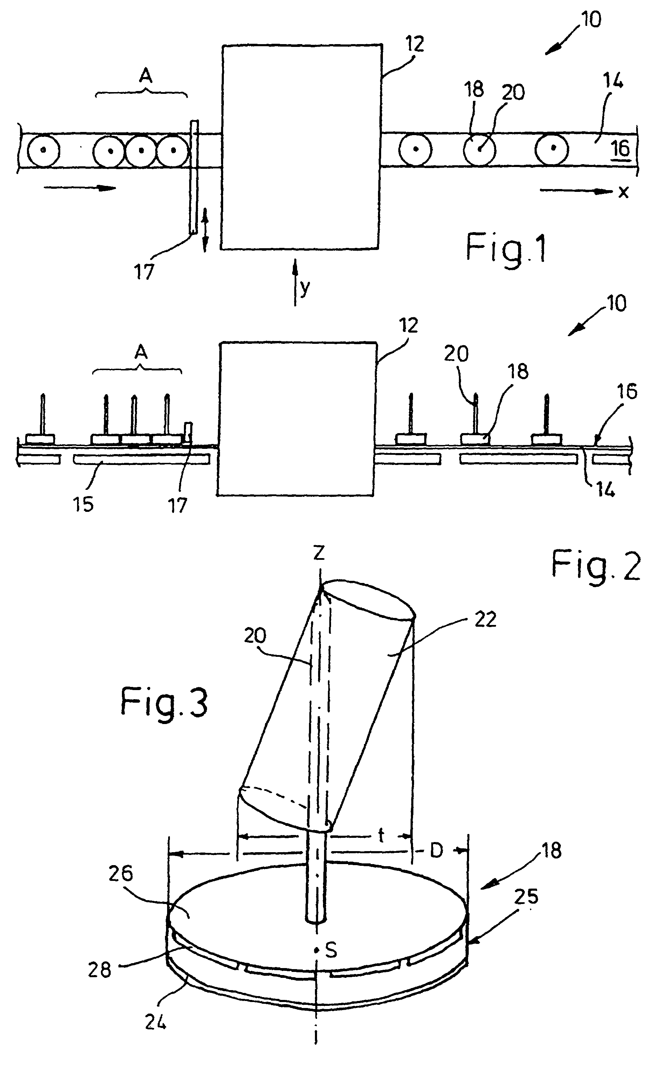

Ein in den Fig. 1 und 2 dargestellte Anlage zum Bearbeiten von Behältern weist eine Bearbeitungsstation 12 und ein Förderband 14 mit einer Förderfläche 16 auf. Unter dem Förderband 14 sind Magnetplatten 15 angeordnet, die zusammen mit dem Förderband 14 einen Magnetförderer bilden. Das Förderband 14 durchläuft die Bearbeitungsstation mit im wesentlichen konstanter Geschwindigkeit.

Die in der Bearbeitungsstation 12 zu bearbeitenden Behälter 22 ― diese sind aus Gründen der besseren Übersicht in den Fig. 1 und 2 nicht dargestellt - werden auf einer weiter unten im Zusammenhang mit Fig. 3 näher erläuterten Palette 18 mittels des Förderbandes 14 transportiert. Ein quer zur Transportrichtung x des Förderbandes 14 verschiebbares Sperrelement 17 dient zum zeitweiligen Zurückhalten der bei der Bearbeitungsstation 12 ankommenden Paletten 18. Der sich durch die Wirkung des Sperrelementes 17 einstellende Rückstau der Paletten 18 dient der Pufferung, so dass eine Synchronisation zwischen dem Förderband 14 und den in der Bearbeitungsstation 12 durchzuführenden Bearbeitungsschritten entfallen kann.

Fig. 3 zeigt eine Palette 18 mit einem Dorn 20, auf dem ein Behälter 22 frei schwingend aufgelegt ist. Die Palette 18 besteht aus einer kreisrunden Scheibe 26 aus Kunststoff mit einer Bodenfläche 24 aus Stahlblech. Seitlich am Umfang der Palette 18 sind Magnete 28 mit radial nach aussen gerichteten gleichen Polen angeordnet. Der beispielsweise ebenfalls aus Kunststoff bestehende Dorn 20 ragt vom Zentrum der Kunststoffscheibe 26 und senkrecht zur Bodenfläche 24 von der Palette 18 ab.

Der Durchmesse D der Palette 18 ist so bemessen, dass er in jedem Fall grösser ist als die maximale Auslenkung t eines auf dem Dorn 20 aufliegenden Behälters 22. Bei der gewählten Anordnung liegt der Schwerpunkt S der Palette 18 in der Dornachse z im Bereich der Bodenfläche 24.

Im Betrieb liegt die Bodenfläche 24 der Palette 18 der Förderfläche 16 des Förderbandes 14 an. Durch die zwischen den Magnetplatten 15 und der aus magnetisierbarem Material bestehenden Bodenfläche 14 der Palette 18 wirkenden magnetischen Kräfte wird die Palette 18 zusätzlich zu ihrem Eigengewicht gegen das Förderband 14 gedrückt, wodurch die Stabilität der Palette 18 erhöht wird, so dass ein Kippen der Palette praktisch nicht mehr möglich ist. Trotz dieser erhöhten, auf das Förderband 14 wirkenden Auflagekraft der Palette 18 ist deren relative Verschiebbarkeit auf der Förderfläche 16 gewährleistet, so dass die Paletten 18 mit dem Sperrelement 17 zurückgehalten werden können, ohne dass dadurch die Laufgeschwindigkeit des Förderbandes 14 vermindert wird. Durch die oben beschriebene Dimensionierung des Palettendurchmessers D im Vergleich zur maximal möglichen Auslenkung t eines auf dem Dom 20 aufliegenden Behälters 22 wird verhindert, dass sich die Behälter 22 gegenseitig berühren können. Die seitlich am Umfang der Paletten 18 angeordneten gleichpoligen Magnete 28 bewirken zwischen den sich in einer Rückstauzone annähernden Paletten 18 einen Abstosseffekt, so dass die Stosswirkung beim Zusammentreffen zweier Paletten 18 durch die abstossenden Kräfte der Magnete 28 gedämpft und die Gefahr einer Beschädigung der auf den Domen 20 aufliegenden Behälter 22 vermindert wird.

## Patentansprüche

1. Verwendung einer als kreisrunde Scheibe ausgebildeten, wenigstens teilweise aus magnetisierbarem Material bestehenden Palette (18) mit einem zentral und senkrecht zu einer Bodenfläche (24) der Palette (18) angeordneten Dorn (20) zum Fördern von frei schwingend auf den Dom (20) auflegbaren und eine im Vergleich zum Durchmesser (D) der Palette (18) kleinere maximale Auslenkung (t) aufweisenden Behältern (22).

2. Verwendung einer Palette nach Anspruch 1, **dadurch gekennzeichnet, dass** die Palette (18) eine von der Bodenfläche (24) aufragende, im wesentlichen zylindrische Umfangfläche (25) aufweist.

3. Verwendung einer Palette nach Anspruch 1 oder 2, **dadurch gekennzeichnet, dass** der Schwerpunkt (S) der Palette (18) in der Dornachse (z) im Bereich der Bodenfläche (24) liegt.

4. Verwendung einer Palette nach einem der Ansprüche 1 bis 3, **dadurch gekennzeichnet, dass** die Palette (18) aus Blech aus magnetisierbarem Material, insbesondere aus Stahlblech gefertigt ist.

5. Verwendung einer Palette nach einem der Ansprüche 1 bis 3, **dadurch gekennzeichnet, dass** die Palette (18) aus Kunststoff mit eingegossenem magnetisierbaren Material gefertigt ist.

6. Verwendung einer Palette nach einem der Ansprüche 1 bis 3, **dadurch gekennzeichnet, dass** die Palette (18) aus ein- oder beidseitig mit magnetisierbarem Material beplanktem Kunststoff gefertigt ist.

7. Verwendung einer Palette nach einem der Ansprüche 1 bis 6, **dadurch gekennzeichnet, dass** seitlich am Umfang (25) der Palette (18) Magnete (28) mit radial nach aussen gerichteten gleichen Polen angeordnet sind.

8. Verwendung einer Palette nach einem der Ansprüche 1 bis 7 zum Fördern von fliessgepressten Dosen- und Tubenkörpern aus Aluminium zwischen Bearbeitungsstationen.

9. Verwendung einer Palette nach einem der Ansprüche 1 bis 8 in einer Anlage zum Bearbeiten von Behältern (22) mit wenigstens einer Bearbeitungsstation (12) und mit einer wenigstens einen Magnetförderer (14, 15) umfassenden Fördervorrichtung zum Fördern der Behälter (22) zu den und/oder in den und/oder von den Bearbeitungsstationen (12), wobei die Paletten (18) mit ihrer Bodenfläche (24) einer Förderfläche (16) des Magnetförderers (14, 15) anliegen und mittels magnetischer Kräfte auf der Förderfläche (16) relativ zu dieser verschiebbar gehalten werden.

10. Verwendung einer Palette nach einem der Ansprüche 1 bis 8 in einer Fördervorrichtung mit einem Magnetförderer (14, 15) und einer Anzahl von Paletten (18) zum Fördern von Behältern (22), wobei die Paletten (18) mit ihrer Bodenfläche (24) einer Förderfläche (16) des Magnetförderers (14, 15) anliegen und mittels magnetischer Kräfte auf der Förderfläche (16) relativ zu dieser verschiebbar gehalten werden.

## Claims

1. Use of a pallet (18) in the form of a circular disc, consisting at least partially of magnetisable material and comprising a pin (20) arranged centrally and perpendicularly relative to a bottom surface (24) of the pallet (18) for conveying containers (22) which can be placed in a freely swinging manner on the pin (20) and which have a maximum deflection (t) smaller than the diameter (D) of the pallet (18).

2. Use of a pallet according to claim 1, **characterised in that** the pallet (18) has a substantially cylindrical circumferential surface (25) projecting from the bottom surface (24).

3. Use of a pallet according to claim 1 or claim 2, **characterised in that** the centre of gravity (S) of the pallet (18) is situated on the pin axis (z) in the region of the bottom surface (24).

4. Use of a pallet according to one of claims 1 to 3, **characterised in that** the pallet (18) is made of magnetisable sheet metal, in particular sheet steel.

5. Use of a pallet according to one of claims 1 to 3, **characterised in that** the pallet (18) is made of plastic with an integrally cast magnetisable material.

6. Use of a pallet according to one of claims 1 to 3, **characterised in that** the pallet (18) is made of plastic coated on one or both sides with magnetisable material.

7. Use of a pallet according to one of claims 1 to 6, **characterised in that** magnets (28) with radially outwardly directed identical poles are arranged laterally on the circumference (25) of the pallet (18).

8. Use of a pallet according to one of claims 1 to 7 for conveying extruded tin and tube bodies made of aluminium between processing stations.

9. Use of a pallet according to one of claims 1 to 8 in a plant for processing containers (22) comprising at least one processing station (12) and a conveying device including at least one magnetic conveyor (14, 15) for conveying the containers (22) to and/or into and/or from the processing stations (12), the pallets (18) bearing via their bottom surfaces (24) against a conveying surface (16) of the magnetic conveyor (14, 15) and being held by means of magnetic forces on the conveying surface (16) in such a manner that they are displaceable relative thereto.

10. Use of a pallet according to one of claims 1 to 8 in a conveying device comprising a magnetic conveyor (14, 15) and a number of pallets (18) for conveying containers (22), the pallets (18) bearing via their bottom surfaces (24) against a conveying surface (16) of the magnetic conveyor (14, 15) and being held by means of magnetic forces on the conveying surface (16) in such a manner that they are displaceable relative thereto.

## Revendications

1. Utilisation d'une palette (18) réalisée sous forme de plaque circulaire, constituée au moins en partie en matériau magnétisable et comportant un mandrin (20) agencé au centre et perpendiculairement à une surface de fond (24) de la palette (18) et destiné à transporter des récipients (22) susceptibles d'être posés en oscillation libre sur le mandrin (20) et présentant une déviation maximale (t) plus petite que le diamètre (D) de la palette (18).

2. Utilisation d'une palette selon la revendication 1, **caractérisée en ce que** la palette (18) présente une surface périphérique (25) sensiblement cylindrique dressée depuis la surface de fond (24).

3. Utilisation d'une palette selon l'une ou l'autre des revendications 1 et 2, **caractérisée en ce que** le centre de gravité (S) de la palette (18) se trouve dans l'axe (z) du mandrin dans la zone de la surface de fond (24).

4. Utilisation d'une palette selon l'une des revendications 1 à 3, **caractérisée en ce que** la palette (18) est fabriquée en tôle d'un matériau magnétisable, en particulier en tôle d'acier.

5. Utilisation d'une palette selon l'une des revendications 1 à 3, **caractérisée en ce que** la palette (18) est fabriquée en matière plastique surmoulée sur un matériau magnétisable.

6. Utilisation d'une palette selon l'une des revendications 1 à 3, **caractérisée en ce que** la palette (18) est fabriquée en matière plastique plaquée de matériau magnétisable sur un côté ou sur deux côtés.

7. Utilisation d'une palette selon l'une des revendications 1 à 6, **caractérisée en ce que** des aimants (28) présentant des pôles égaux dirigés radialement vers l'extérieur sont agencés latéralement à la périphérie (25) de la palette (18).

8. Utilisation d'une palette selon l'une des revendications 1 à 7 pour transporter entre des stations de traitement des corps de boîte ou de tube formés par extrusion en aluminium.

9. Utilisation d'une palette selon l'une des revendications 1 à 8 dans une installation pour traiter des récipients (22), comportant au moins une station de traitement (12) et un dispositif de transport comprenant au moins un transporteur magnétique (14, 15) et destiné à transporter les récipients (22) vers et/ou jusque dans et/ou depuis les stations de traitement (12), les palettes (18) prenant appui par leur surface de fond (24) contre une surface de transport (16) du transporteur magnétique (14, 15) et étant retenues au moyen de forces magnétiques sur la surface de transport (16) avec faculté de déplacement par rapport à celle-ci.

10. Utilisation d'une palette selon l'une des revendications 1 à 8 dans un dispositif de transport comportant un transporteur magnétique (14, 15) et un certain nombre de palettes (18) pour transporter des récipients (22), les palettes (18) prenant appui par leur surface de fond (24) contre une surface de transport (16) du transporteur magnétique (14, 15) et étant retenues au moyen de forces magnétiques sur la surface de transport (16) avec faculté de déplacement par rapport à celle-ci.
